# FASCICULE DE BREVET EUROPEEN

(11) **EP 2 235 891 B1**
(45) Date de publication et mention de la délivrance du brevet: **15.05.2019**
(21) Numéro de dépôt: 09704774.0
(22) Date de dépôt: 20.01.2009
(51) Int. Cl.: H04L 12/70

(54) **PROCÉDÉ D'AIDE À LA RÉSERVATION DE RESSOURCES POUR UN RÉSEAU À COMMUTATION DE PAQUETS, ET DISPOSITIF DE GESTION ET DISPOSITIF D'AIDE ASSOCIÉS**
VERFAHREN ZUR UNTERSTÜTZUNG DER RESERVIERUNG VON RESSOURCEN FÜR EIN PAKETSCHALTUNGSNETZWERK SOWIE VERWALTUNGSVORRICHTUNG UND UNTERSTÜTZUNGSVORRICHTUNG DAFÜR
METHOD OF AIDING THE RESERVATION OF RESOURCES FOR A PACKET SWITCHING NETWORK, AND ASSOCIATED MANAGEMENT DEVICE AND AID DEVICE

(30) Priorité: 22.01.2008 EP 08300045; 10.06.2008 FR 0853849
(43) Date de publication de la demande: 06.10.2010
(73) Titulaire: InterDigital CE Patent Holdings, 75017 Paris (FR)
(72) Inventeur: MACE, Gaël, F-35850 Langan (FR); LE ROUX, Jean, F-35000 Rennes (FR); CHAPEL, Claude, F-35235 Thorigne-fouillard (FR)
(74) Mandataire: Huchet, Anne
(86) Numéro de dépôt international: PCT/EP2009/050588
(87) Numéro de publication internationale: WO 2009/092705

(56) Documents cités:
- ANONYMOUS: "15-441 Computer Networking Lecture 7 - IP Addressing and Forwarding" 15-441 COMPUTER NETWORKS, [Online] 7 février 2008 (2008-02-07), XP002521361 CARNEGIE MELLON SCHOOL OF COMPUTER SCIENCE Extrait de l'Internet: URL:http://www.cs.cmu.edu/afs/cs/academic/ class/15441-f01/www/lectures/lecture07.ppt > [extrait le 2009-03-26]
- ANONYMOUS: "15-441, Spring 2008: Computer Networks" INTERNET ARTICLE, [Online] 5 mai 2008 (2008-05-05), XP002521362 CARNEGIE MELLON SCHOOL OF COMPUTER SCIENCE Extrait de l'Internet: URL:http://www.cs.cmu.edu/~dga/15-441/S08/ index.html> [extrait le 2009-03-26]

## Description

### Domaine technique de l'invention

L'invention concerne les réseaux de communication du type dit « à commutation de paquets » (ou « packet switched networks »), et plus précisément l'aide à la réservation de ressources au sein de tels réseaux.

On entend ici par « ressource » tout type de variable qui caractérise un flot de données (ou « data flow ») échangé entre deux noeuds d'un coeur d'un réseau de communication via une infrastructure donnée. Il pourra donc notamment (et non limitativement) s'agir de la bande passante minimale et/ou maximale, de la jigue (ou « jitter »), du temps de latence (ou temps d'attente, ou encore « latency »), de la taille minimale et/ou maximale des paquets transmis ou du nombre de paquets consécutifs par flot (ou « burst »).

Par ailleurs, on entend ci-après par « flux » (ou « stream ») un ensemble de données véhiculées dans des paquets ayant tous en commun un même identifiant, défini par exemple par un couple (adresse source, adresse de destination) ou par un triplet (adresse source, adresse de destination, numéro de port).

Enfin, on entend ici par « réseau de communication à commutation de paquets (ou d'étiquettes) » un réseau de communication asynchrone, comme par exemple un réseau MPLS, GMPLS, ATM, Frame Relay (FR), TDMA, CDMA, IP ou Ethernet (de type filaire (ou LAN (pour « Local Area Network) - standard IEEE 802.3) ou de type non filaire (ou WLAN (pour « Wireless Local Area Network)).

### Etat de l'art

Comme le sait l'homme de l'art, certaines applications dites à contrainte temporelle doivent garantir que des flux de données seront acheminés d'un équipement de communication à un autre en respectant certaines caractéristiques techniques, comme par exemple une bande passante maximale et/ou un délai d'attente (ou latency) minimal. C'est notamment le cas des applications dites de « streaming » qui consistent à transmettre en continu, en direct ou en différé, un contenu (éventuellement multimédia) en vue d'une lecture au fil de l'eau (et donc sans que l'intégralité du contenu n'ait été reçue).

15-441 Computer Networking, Lecture 7 - IP Addressing and Forwarding décrit en termes généraux diverses méthodes pour le routage de paquets IP. En particulier l'utilisation de table de routage qui mettent en correspondance, pour un flux donné, les ports d'entrée et ceux de sortie d'un commutateur ("switch").

Afin qu'une application à contrainte temporelle puisse respecter des caractéristiques techniques, il faut notamment que des ressources du coeur de réseau chargé du transport de contenu ait été réservées à cet effet par un ou plusieurs noeuds de relayage de ce réseau. On entend ici par « noeud de relayage » un équipement appartenant à un coeur de réseau de communication et ayant un rôle dans le relayage des paquets des flux, comme par exemple un équipement de commutation (ou commutateur ou encore « switch ») ou un équipement de routage (ou routeur ou encore « router »). Pour réserver des ressources, consécutivement à la réception d'une demande de réservation de ressources issue d'une application tournant, par exemple, dans un équipement de communication, un noeud de relayage doit tout d'abord adresser à son réseau une requête appropriée, puis il doit attendre que les ressources requises lui soient accordées, ce qui peut parfois nécessiter qu'il annule des ressources précédemment réservées (et donc accordées). On comprendra que ces opérations sont chronophages et donc entraînent des retards qui peuvent s'avérer incompatibles avec certaines contraintes temporelles d'applications.

### Résumé de l'invention

L'invention a donc pour but d'améliorer la situation, et plus précisément de permettre une pré-réservation de ressources pour les noeuds de relayage d'un coeur de réseau.

A cet effet, l'invention propose tout d'abord un procédé de gestion de réservation de ressources selon la revendication 1, un procédé d'aide à la réservation de ressource selon la revendication 7, les dispositifs et programme produit d'ordinateur correspondants en revendications 11,12 et 13 respectivement. Les revendications dépendantes couvrent des modes de réalisation préférés.

### Brève description des dessins

D'autres caractéristiques et avantages de l'invention apparaîtront à l'examen de la description détaillée ci-après, et des dessins annexés, sur lesquels :
- la figure 1 illustre de façon schématique et fonctionnelle un exemple partiel de coeur de réseau local filaire de type Ethernet/IP comprenant quatre équipements de commutation équipés chacun d'un exemple de réalisation de dispositif d'aide selon l'invention et aux ports desquels sont connectés, selon une première configuration, neuf équipements de communication équipés pour certains d'un exemple de réalisation de dispositif de gestion selon l'invention,
- la figure 2 illustre de façon schématique et fonctionnelle un exemple d'arborescence définissant les connexions établies entre les équipements de communication et les équipements de commutation de la figure 1, conformément à la première configuration,
- la figure 3 est identique à la figure 1, mais avec une seconde configuration de connexion entre les quatre équipements de commutation et les neuf équipements de communication, et
- la figure 4 illustre de façon schématique et fonctionnelle un exemple d'arborescence définissant les connexions établies entre les équipements de communication et les équipements de commutation de la figure 3, conformément à la seconde configuration.

Les dessins annexés pourront non seulement servir à compléter l'invention, mais aussi contribuer à sa définition, le cas échéant.

### Description détaillée

L'invention a pour objet de faciliter (si possible en l'accélérant) la réservation de ressources au sein d'un réseau de communication à commutation de paquets (ou d'étiquettes).

Dans ce qui suit, on considère à titre d'exemple non limitatif que le réseau de communication à commutation de paquets est un réseau local filaire de type Ethernet/IP (ou LAN (pour « Local Area Network) - standard IEEE 802.3). Mais, l'invention n'est pas limitée à ce type de réseau de communication à commutation de paquets. Elle concerne en effet tout type de réseau de communication à commutation de paquets (ou d'étiquettes), asynchrone, et notamment les réseaux de type MPLS, GMPLS, ATM, Frame Relay (FR), TDMA, CDMA, IP et Ethernet non filaire (ou WLAN (pour « Wireless Local Area Network)).

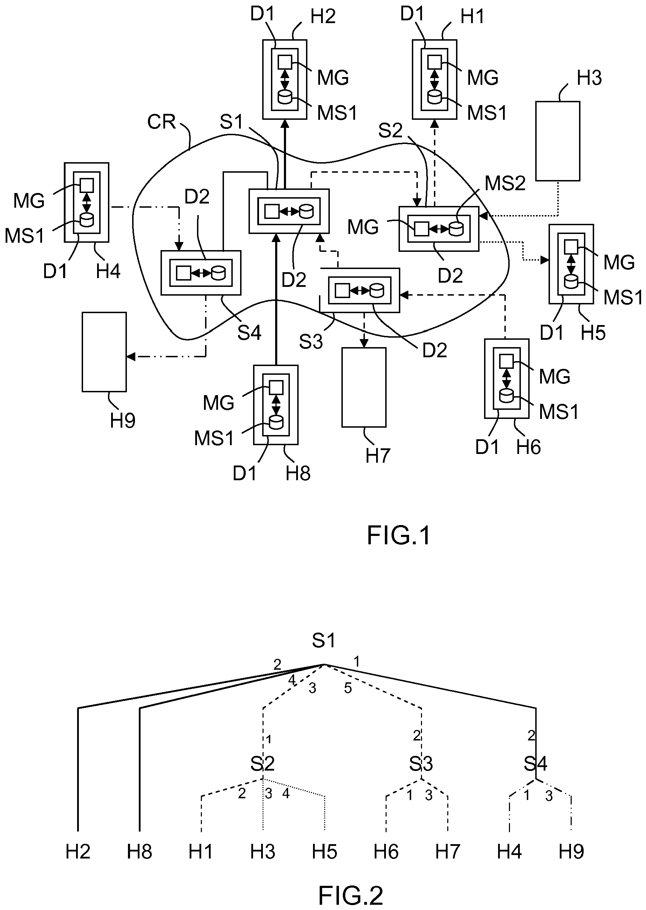

On a schématiquement illustré sur la figure 1 un exemple non limitatif de coeur de réseau local filaire de type Ethernet/IP CR comprenant quatre noeuds de relayage Si (i = 1 à 4) aux ports desquels sont connectés, selon une première configuration, neuf équipements de communication (ou hôtes) Hj (j = 1 à 9).

Dans ce qui suit, on considère à titre d'exemple non limitatif que les quatre noeuds de relayage S1 à S4 sont des équipements de commutation (ou commutateurs ou encore « switches ») Ethernet/IP. Mais, l'invention n'est pas limitée à ce type de noeud de relayage. Elle concerne en effet tout type d'équipement appartenant à un coeur de réseau de communication et ayant un rôle dans le relayage des paquets des flux. Par conséquent, il pourra également s'agir d'équipements de routage (ou routeurs ou encore « routers »), par exemple.

Par ailleurs, on considère dans ce qui suit, à titre d'exemple non limitatif, que les équipements de communication (ou hôtes) Hj sont des équipements de studio impliqués dans la création de contenus multimédia devant être diffusés en mode streaming. Par conséquent, il pourra s'agir de caméras, de serveurs de ralentis, de lecteurs et/ou enregistreurs de données audio et/ou vidéo, de microphones, de casques audio, de tables de mixage audio et/ou vidéo, ou d'ordinateurs de gestion. Mais, l'invention n'est pas limitée à ce type d'équipement de communication. Elle concerne en effet tout type d'équipement de communication pouvant se connecter à un noeud de relayage Si d'un réseau de communication à commutation de paquets. Par conséquent, il pourra également s'agir d'ordinateurs fixes ou portables, de récepteurs de contenus audio et/ou vidéo (éventuellement de type STB (« Set-Top Box ») ou « home gateway »), de téléphones fixes ou mobiles, d'assistants personnels numériques (ou PDA) communiquant, ou de serveurs de contenus.

On notera que le choix de connecter des équipements de communication Hj à des commutateurs Si est bien adapté aux applications à (forte) contrainte temporelle, comme par exemple les applications de streaming audio et/ou vidéo. En effet, les commutateurs sont les équipements de réseau qui respectent le mieux les contraintes temporelles du fait qu'ils gèrent le transfert des paquets de données des flux en fonction des informations qui sont contenues, d'une part, dans leurs entêtes qui appartiennent à la couche 2 (couche de transport appelée couche de liaison de données (ou « data link »)) du modèle en couches OSI, et d'autre part, dans une table de transfert (ou « forwarding table » - table associant une adresse matérielle (« hardware ») à un port de commutateur).

L'invention propose de mettre en oeuvre au sein d'un coeur de réseau (de communication à commutation de paquets) CR, comportant un nombre N de noeuds de relayage Si (ici i = 1 à 4, N = 4), un procédé d'aide à la réservation de ressources.

Ce procédé consiste, d'une part, à déterminer pour certains au moins des N noeuds (de relayage) Si au moins un plan de réservation de ressource Pik (k ≥ 1) qui est défini par un identifiant de plan associé à un identifiant de flux et au moins deux ports, et d'autre part, à mémoriser pour chacun des N noeuds (de relayage) Si les différents plans Pik les concernant.

La détermination d'un nouveau plan Pik pour un noeud Si se fait de préférence chaque fois qu'il a reçu un message demandant une nouvelle réservation ou pré-réservation de ressource pour un flux. Ce nouveau plan Pik doit alors être adapté à cette nouvelle réservation ou pré-réservation de ressource demandée.

On notera qu'il est avantageux que chaque détermination de plan Pik se fasse au niveau du noeud Si qui est susceptible de l'utiliser. A cet effet, et comme illustré, chaque noeud Si peut par exemple être équipé d'un dispositif d'aide à la réservation de ressource D2.

On entend ici par « équipé » le fait de comprendre en interne, comme illustré non limitativement, ou d'être connecté à un dispositif d'aide D2.

Il est important de noter que l'on pourrait envisager qu'un dispositif d'aide soit de type centralisé et donc adapté à la détermination des plans de réservation Pik pour plusieurs noeuds Si, voire même tous.

Un dispositif d'aide D2, selon l'invention, comprend un module de calcul MC et des moyens de stockage MS2.

Le module de calcul MC est chargé de déterminer pour son (un) noeud Si, en fonction de messages que ce dernier a reçus demandant une réservation ou pré-réservation de ressource, au moins un plan de réservation de ressource Pik (tel que défini ci-avant).

Il est important de noter que les messages précités n'ont pas nécessairement pour objectif de demander que l'on procède immédiatement à une réservation de ressource. Cela peut être le cas. Mais, il est avantageux de prévoir une espèce de phase d'apprentissage au niveau de chaque noeud Si afin de prévoir à l'avance toutes les configurations qu'il pourrait être amené à rencontrer compte tenu des équipements de communication Hj et autres noeuds Si' qui sont couplés à lui, et donc de déterminer à l'avance un plan de réservation Pik pour chaque configuration possible. Par conséquent, un message peut donc avoir pour objectif de demander une « pré-réservation » de ressource.

Il est également important de noter que chaque plan de réservation Pik dispose préférentiellement d'un identifiant de plan qui est unique au sein du coeur de réseau CR. Un plan de réservation Pik est en effet déterminé pour un noeud Si donné. Il correspond donc à des ressources locales spécifiques de ce noeud Si (comme par exemple les politiques de filtrage en entrée et en sortie, les mémoires tampon d'entrée et de sortie, les règles de priorité et les règles de mise en forme (« shaping ») qui doivent être utilisées afin d'assurer pour des flux donnés une qualité de service (QoS) conforme à ce qu'attend l'application demandeuse qui est à l'origine desdits flux.

Par exemple, un plan de réservation Pik peut être défini comme suit :

```
 Stream_spec {
       Integer        StreamId
       Integer        Port_number_Lst []
 }
 Reservation_Plan {
       Integer        Reserv_Plan_Id
       Stream_spec    Data_flow_Lst []
 },
```

où « Stream_spec » concerne un flux (« stream ») désigné par un identifiant de flux « StreamId » et associé à une liste d'au moins deux ports d'un noeud Si « Port_number_Lst », et « Reservation_Plan » concerne un plan de réservation désigné par un identifiant de plan « Reserv_Plan_Id » (ou Pik) et concernant un flux constitué d'une liste d'au moins un flux (ou « stream ») de paquets de données « Data_flow_Lst ».

Les moyens de stockage MS2 sont destinés à stocker chaque définition de plan Pik qui a été déterminée par le module de calcul MC. Tout moyen de stockage connu de l'homme de l'art peut être utilisé, et notamment une mémoire (éventuellement logicielle). Ce stockage peut par exemple se faire sous la forme d'une table de plan(s) de réservation Pik. On comprendra qu'une telle table comprend la définition d'au moins un plan de réservation Pik, et de préférence de plusieurs (pour les raisons invoquées ci-avant).

Dans la première configuration de connexion qui est illustrée sur les figures 1 et 2, on a :
- un noeud S1 ayant son port 1 connecté au noeud S4 (avec lequel il n'est pas prévu de relayage de flux), ses ports 2 et 4 respectivement connectés aux équipements H2 et H8 (source) (en vue d'un relayage de flux de l'équipement H8 vers l'équipement H2), et ses ports 3 et 5 respectivement connectés aux noeuds S2 et S3 (en vue d'un relayage de flux de l'équipement H6 (source) vers les équipements H7 et H1),
- un noeud S2 ayant ses ports 1 et 2 respectivement connectés au noeud S1 et à l'équipement H1 (en vue du relayage des flux issus de l'équipement H6 et destinés à l'équipement H1), et ses ports 3 et 4 respectivement connectés aux équipements H3 (source) et H5 (en vue d'un relayage de flux de l'équipement H3 vers l'équipement H5),
- un noeud S3 ayant son port 1 connecté à l'équipement H6 (source) (en vue du relayage des flux issus de cet équipement H6), et ses ports 2 et 3 respectivement connectés au noeud S1 (en vue du relayage des flux issus de l'équipement H6 et destinés à l'équipement H1) et à l'équipement H7 (en vue du relayage des flux issus de l'équipement H6 et destinés à cet équipement H7),
- un noeud S4 ayant ses ports 1 et 3 respectivement connectés aux équipements H4 (source) et H9 (en vue d'un relayage de flux de l'équipement H4 vers l'équipement H9), et son port 2 connecté au noeud S1 (avec lequel il n'est pas prévu de relayage de flux).

On comprendra que dans cette première configuration de connexion il existe quatre flux relayés par les quatre noeuds S1 à S4.

Le premier flux F1 concerne les équipements H2 et H8. Il est matérialisé sur les figures 1 et 2 par des lignes en traits épais et continus.

Le deuxième flux F2 concerne les équipements H1, H6 et H7. Il est matérialisé sur les figures 1 et 2 par des lignes discontinues (tirets).

Le troisième flux F3 concerne les équipements H3 et H5. Il est matérialisé sur les figures 1 et 2 par des lignes en pointillés.

Le quatrième flux F4 concerne les équipements H4 et H9. Il est matérialisé sur les figures 1 et 2 par des lignes discontinues (alternance de tirets et de double points).

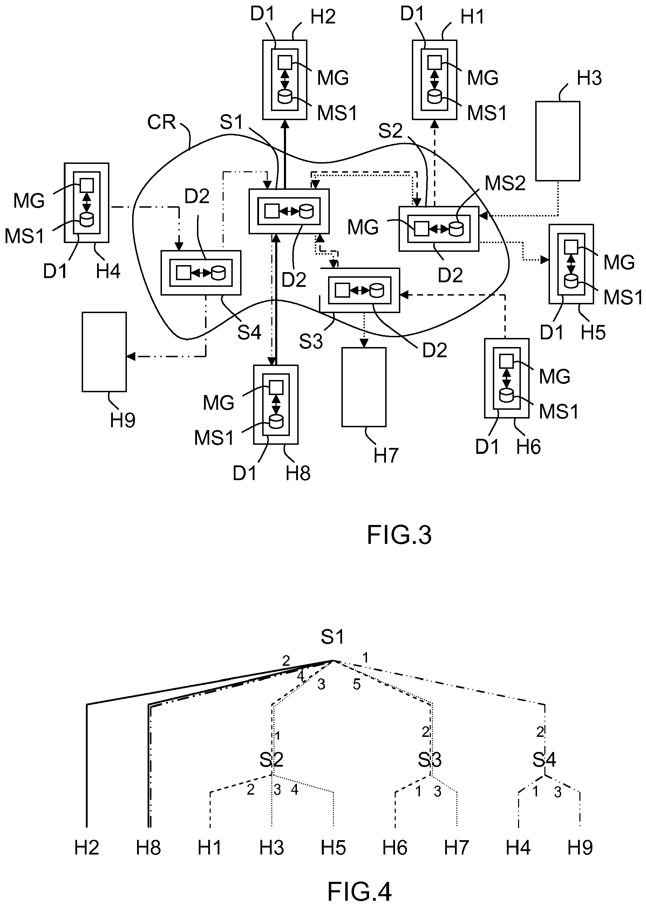

Mais, on peut également envisager d'avoir une deuxième configuration de connexion du type de celle qui est illustrée sur les figures 3 et 4.

Dans cette seconde configuration de connexion, on a :
- le noeud S1 qui a son port 1 connecté au noeud S4 (en vue du relayage des flux issus de l'équipement H4 et destinés à l'équipement H8), ses ports 2 et 4 respectivement connectés aux équipements H2 et H8 (en vue d'un relayage de flux de l'équipement H8 vers l'équipement H2), et ses ports 3 et 5 respectivement connectés aux noeuds S2 et S3 (en vue, d'une part, d'un relayage des flux issus de l'équipement H6 et destinés à l'équipement H1, et d'autre part, d'un relayage des flux issus de l'équipement H3 et destinés à l'équipement H7),
- un noeud S2 qui a ses ports 3 et 4 respectivement connectés aux équipements H3 (source) et H5 (en vue d'un relayage de flux de l'équipement H3 vers l'équipement H5), et ses ports 1 et 2 respectivement connectés au noeud S1 et à l'équipement H1 (en vue, d'une part, du relayage des flux issus de l'équipement H6 et destinés à l'équipement H1, et d'autre part, du relayage des flux issus de l'équipement H3 et destinés à l'équipement H7),
- un noeud S3 ayant son port 1 connecté à l'équipement H6 (source) (en vue du relayage des flux issus de cet équipement H6 et destinés à l'équipement H1), et ses ports 2 et 3 respectivement connectés au noeud S1 (en vue du relayage des flux issus de l'équipement H6 et destinés à l'équipement H1) et à l'équipement H7 (en vue du relayage des flux issus de l'équipement H3 et destinés à cet équipement H7),
- un noeud S4 ayant ses ports 1 et 3 respectivement connectés aux équipements H4 (source) et H9 (en vue d'un relayage de flux de l'équipement H4 vers l'équipement H9), et son port 2 connecté au noeud S1 (en vue du relayage des flux issus de l'équipement H4 et destinés à l'équipement H8).

On comprendra que dans cette seconde configuration de connexion il existe également quatre flux relayés par les quatre noeuds S1 à S4.

Le premier flux F1 concerne les équipements H2 et H8. Il est matérialisé sur les figures 3 et 4 par des lignes en traits épais et continus.

Le deuxième flux F2 concerne les équipements H1 et H6. Il est matérialisé sur les figures 3 et 4 par des lignes discontinues (tirets).

Le troisième flux F3 concerne les équipements H3, H5 et H7. Il est matérialisé sur les figures 3 et 4 par des lignes en pointillés.

Le quatrième flux F4 concerne les équipements H4, H8 et H9. Il est matérialisé sur les figures 3 et 4 par des lignes discontinues (alternance de tirets et de double points).

En raison de ces première et seconde configurations de connexion possibles, on peut établir les tables de plans de réservation Pik (ou Reserv_Plan_Id) suivantes :
- pour le noeud S1 :

| **Reserv_Plan**_**Id** | **StreamId** | **Port**_**Number_Lst** |
|---|---|---|
| 1 | 1 | 2, 4 |
| | 2 | 3, 5 |
| 5 | 1 | 2, 4 |
| | 2 | 3, 5 |
| | 3 | 3, 5 |
| | 4 | 1, 4 |

- pour le noeud S2 :

| **Reserv_Plan_Id** | **StreamId** | **Port_Number_Lst** |
|---|---|---|
| 2 | 2 | 1, 2 |
| | 3 | 3, 4 |
| 6 | 2 | 1, 2 |
| | 3 | 1, 3, 4 |

- pour le noeud S3 :

| **Reserv_Plan_Id** | **StreamId** | **Port_Number_Lst** |
|---|---|---|
| 3 | 2 | 1, 2, 3 |
| 7 | 2 | 1, 2 |
| | 3 | 2, 3 |

- pour le noeud S4 :

| **Reserv_Plan_Id** | **StreamId** | **Port_Number_Lst** |
|---|---|---|
| 4 | 4 | 1, 3 |
| 8 | 4 | 1, 2, 3 |

On déduit des tables qui précèdent, qu'il existe ici à un instant donné un ensemble de huit plans de réservation Pik qui ont été déterminés pour les quatre noeuds S1 à S4 du coeur de réseau CR (mais seuls quatre d'entre eux sont utilisés (et donc actifs) à cet instant donné). Les plans de réservation ayant les identifiants de plan (Reserv_Plan_Id) 1 et 5 correspondent respectivement à P11 et P15 et peuvent être utilisés par le noeud S1. Les plans de réservation ayant les identifiants de plan (Reserv_Plan_Id) 2 et 6 correspondent respectivement à P22 et P26 et peuvent être utilisés par le noeud S2. Les plans de réservation ayant les identifiants de plan (Reserv_Plan_Id) 3 et 7 correspondent respectivement à P33 et P37 et peuvent être utilisés par le noeud S3. Les plans de réservation ayant les identifiants de plan (Reserv_Plan_Id) 4 et 8 correspondent respectivement à P44 et P48 et peuvent être utilisés par le noeud S4.

L'attribution des identifiants de plan (Reserv_Plan_Id) aux différents plans de réservation Pik peut se faire comme indiqué ci-après.

Lorsqu'un nouveau plan de réservation Pik doit être déterminé pour l'un des N noeuds Si, on peut par exemple lui attribuer un identifiant de plan dont la valeur est supérieure d'une unité à la plus grande valeur connue d'identifiant de plan existant au sein du coeur de réseau CR. Par exemple, si l'on sait que la plus grande valeur d'identifiant de plan est égale à 5, on va attribuer au nouveau plan de réservation Pik un identifiant de plan dont la valeur est égale à 6 (soit 5+1).

On comprendra qu'en présence d'un dispositif d'aide D2 dans un noeud Si, c'est son module de calcul MC qui va déterminer la valeur qu'il doit attribuer à l'identifiant de plan de chaque nouveau plan de réservation Pik.

Pour ce faire, le dispositif d'aide D2 peut être informé par le coeur de réseau CR de toutes les valeurs d'identifiant de plan qui ont déjà été attribuées. Mais, on peut procéder différemment en l'absence d'une telle information. En effet, le module de calcul MC d'un noeud Si (ayant besoin d'un nouveau plan Pik) peut par exemple commencer par attribuer à ce dernier un identifiant de plan provisoire dont la valeur est supérieure d'une unité à la plus grande valeur d'identifiant de plan attribuée à un plan de réservation Pik' de la table (locale) qui est stockée dans les moyens de stockage MS2 de son dispositif d'aide D2. Puis, il peut ordonner à son noeud Si d'interroger chacun des N-1 autres noeuds Si' (i'≠i) du coeur de réseau CR, afin de déterminer si l'un d'entre eux dispose déjà d'un plan Pi'k qui est associé à cet identifiant de plan provisoire. Ainsi, dans la négative il peut ensuite, après avoir éventuellement attendu un temps de temporisation choisi, attribuer définitivement à ce nouveau plan Pik l'identifiant de plan provisoire. En revanche, dans l'affirmative, après avoir éventuellement attendu un temps de temporisation choisi, il attribue au nouveau plan Pik un identifiant de plan dont la valeur est supérieure d'une unité à la plus grande valeur connue des identifiants de plan existants au sein du coeur de réseau CR.

Tout type de message, conforme à un protocole utilisé au sein du coeur de réseau CR, peut être utilisé par un noeud Si pour interroger les N-1 autres noeuds Si'. Ainsi, il peut par exemple s'agir d'un message de type BPDU (« Bridge Protocol Data Unit ») contenant la valeur de l'identifiant de plan provisoire que l'on veut attribuer à un nouveau plan Pik.

De même, chaque noeud Si' interrogé peut répondre au noeud Si qui l'a interrogé par tout type de message, dès lors qu'il est conforme à un protocole utilisé au sein du coeur de réseau CR. Ainsi, chaque noeud Si' interrogé peut par exemple répondre à un message BPDU par un message de type « NACK BPDU » qui indique la plus grande valeur d'identifiant de plan stockée dans les moyens de stockage MS2 de son dispositif d'aide D2 si celle-ci est supérieure à celle qui est contenue dans le message BPDU reçu.

On notera qu'un dispositif d'aide D2, selon l'invention, peut être réalisé sous la forme d'une combinaison de modules logiciels et de circuits électroniques (« hardware »), ou bien de circuits électroniques, ou encore de modules logiciels.

A un instant donné les N noeuds Si utilisent respectivement N plans de réservation Pik d'une combinaison qui a été déterminée à un précédent instant parmi tous les plans de réservation précédemment déterminés et dont les définitions étaient par exemple stockées à cet instant précédent dans les tables des moyens de stockage MS2 des dispositifs d'aide D2 des N noeuds Si.

Une combinaison de N plans Pik pour N noeuds Si du coeur de réseau CR constitue une configuration globale (qui elle-même peut être vue comme une espèce de plan de réservation global). Plus précisément, on peut définir une configuration globale CG comme l'ensemble stable de tous les plans de réservation susceptibles d'être actifs simultanément sur une période de temps non nulle. Il est en effet important de noter qu'une combinaison est constituée de N plans Pik compatibles entre eux.

Par exemple, chaque détermination d'une nouvelle combinaison de N plans Pik peut être effectuée consécutivement à l'émission par l'un des N noeuds Si d'une notification de modification de l'un des plans Pik le concernant. On notera qu'une telle modification peut résulter de la réception préalable par le noeud Si d'un message demandant une nouvelle réservation ou pré-réservation de ressource pour un flux qu'il doit relayer ou bien la fin d'une réservation de ressource pour un flux qu'il relayait jusqu'alors.

Il est important de noter qu'une nouvelle configuration globale (ou combinaison) CG est constituée, par rapport à une configuration globale (ou combinaison) précédemment calculée, d'au moins le nouveau plan Pik qui est à l'origine de l'émission par l'un des N noeuds Si d'une notification de modification, et possiblement d'un ou plusieurs autres plans Pi'k' (précédemment identifiés).

Les déterminations des (nouvelles) combinaisons de N plans Pik, constituant des configurations globales CG, peuvent par exemple se faire de façon centralisée dans un équipement dit maître, équipé à cet effet d'un dispositif de gestion D1, selon l'invention.

On entend ici par « équipé » le fait de comprendre en interne, comme illustré non limitativement, ou d'être connecté à un dispositif de gestion D1.

Dans l'exemple non limitatif illustré sur les figures 1 et 3, des dispositifs de gestion D1 ont été implantés dans certains des équipements de communication (H1, H2, H4, H5, H6 et H8). Mais, des dispositifs de gestion D1 peuvent être implantés dans l'un au moins des équipements de communication Hj et/ou dans l'un au moins des noeuds du coeur de réseau CR (et par exemple dans un noeud de relayage Si). Par conséquent, l'un au moins des noeuds Si peut éventuellement être équipé à la fois d'un dispositif d'aide D2 et d'un dispositif de gestion D1.

Lorsqu'il n'existe qu'un seul équipement qui dispose d'un dispositif de gestion D1, il est donc automatiquement l'équipement maître. En revanche, lorsque plusieurs équipements (Hj et/ou Si) disposent d'un dispositif de gestion D1, il est préférable que l'un d'entre eux soit choisi afin d'assurer le rôle d'équipement maître.

Par exemple, ce choix peut se faire parmi les équipements qui se sont portés candidats. Un équipement candidat est par exemple un équipement muni d'un dispositif de gestion D1 et qui a transmis en mode diffusion, et donc à destination de tous les autres équipements, un message spécifique, par exemple de type PDU (« Protocol Data Unit »), pour notifier sa volonté d'assurer le rôle du maître.

A titre d'exemple non limitatif, on peut choisir parmi les candidats celui qui dispose de l'adresse IP la plus basse. Dans une variante, le candidat maître peut être choisi en fonction du « poids » (plus court chemin, bande passante maximale, etc.) de l'ensemble des liens qui l'associent aux autres noeuds du réseau ou équipements Hj. Dans une autre variante, le candidat maître peut être choisi arbitrairement et « manuellement », par exemple grâce à un paramètre d'une « MIB SNMP ».

Un dispositif de gestion D1, selon l'invention, comprend un module de gestion MG et des moyens de stockage MS1.

Consécutivement à l'émission par l'un des N noeuds Si d'une notification de modification de l'un des plans Pik le concernant, le module de gestion MG détermine une nouvelle combinaison de N plans de réservation de ressource Pik pour N noeuds Si. Pour ce faire, il détermine les N plans de la nouvelle combinaison parmi l'ensemble des définitions de tous les plans de réservation de ressource Pik qui sont associés à ces N noeuds Si, compte tenu des N plans qu'ils sont en train d'utiliser respectivement, et donc qui sont actifs, et compte tenu dudit nouveau plan.

Par exemple, les moyens de stockage MS1 stockent l'ensemble des définitions de tous les plans de réservation de ressource Pik qui sont associés à ces N noeuds Si. Ils sont par exemple mis à jour, éventuellement périodiquement, par le dispositif de gestion D1, consécutivement à l'interrogation des N noeuds Si par son équipement maître.

Par ailleurs, afin de connaître précisément les plans (actifs) Pik qui sont utilisés par les N noeuds Si à un instant donné, le module de gestion MG peut par exemple ordonner à son équipement maître d'adresser aux N noeuds Si, en mode diffusion, un message demandant à chacun d'entre eux de lui transmettre la définition du plan (actif) Pik qu'il utilise.

On notera qu'une nouvelle combinaison (ou configuration globale) CG peut éventuellement comporter un ou plusieurs plans identiques à ceux utilisés dans une combinaison (ou configuration globale) précédemment déterminée (et éventuellement en cours d'utilisation) par les N noeuds Si.

Si la nouvelle combinaison (ou configuration globale) CG déterminée doit être appliquée, alors on procède à la commutation de l'ancienne combinaison (ou configuration globale) vers cette nouvelle combinaison (ou configuration globale). Dans ce cas, le dispositif de gestion D1 de l'équipement maître ordonne à ce dernier d'adresser aux N noeuds Si, en mode diffusion, un message (par exemple de type PDU) contenant la liste des N identifiants de plan qu'ils doivent immédiatement appliquer. Lorsqu'un noeud Si reçoit ce message, il gère localement ses ressources internes (notamment ses mémoires tampon d'entrée et de sortie) afin qu'elles soient adaptées au plan Pik de la nouvelle combinaison qu'il doit utiliser (on comprendra qu'un noeud Si n'a rien à adapter lorsqu'on lui demande d'utiliser le même plan que celui qu'il utilisait jusqu'alors).

On notera qu'un dispositif de gestion D1, selon l'invention, peut être réalisé sous la forme d'une combinaison de modules logiciels et de circuits électroniques (« hardware »), ou bien de circuits électroniques, ou encore de modules logiciels.

L'invention ne se limite pas aux modes de réalisation de dispositif de gestion, dispositif d'aide, équipement de communication, noeud de relayage, et procédé d'aide, décrits ci-avant, seulement à titre d'exemple, mais elle englobe toutes les variantes que pourra envisager l'homme de l'art dans le cadre des revendications ci-après.

## Revendications

1. Procédé de gestion de réservation de ressources pour un réseau de communication à commutation de paquets comportant un nombre au moins égal à N noeuds de relayage (Si), chacun desdits noeuds de relayage mémorisant au moins un plan de réservation de ressources (Pik) correspondant à des ressources locales spécifiques audit noeud de relayage (Si) correspondant, **caractérisé en ce que** le procédé comprend au sein d'un dispositif de gestion (D1) :
- la mémorisation desdits plans de réservation de ressources,
- la réception d'un signal comprenant une notification de modification de l'un desdits plans de réservation de ressources (Pik) en provenance d'un desdits N noeuds de relayage associé audit un desdits plans de réservation modifié,
- la détermination d'une nouvelle combinaison de N plans de réservation de ressources qui doivent être utilisés respectivement par lesdits N noeuds de relayage, fondée sur ladite notification de modification, parmi l'ensemble des définitions de desdits plans de réservation de ressource (Pik) mémorisés qui sont associés auxdits N noeuds de relayage (Si) compte tenu des N plans qu'ils sont en train d'utiliser, chacun desdits plans de réservation de ressources (Pik) étant défini par un identifiant de plan (Reserv_Plan_Id) désignant ledit plan de réservation à utiliser par l'un desdits N noeuds de relayage et associé à au moins un identifiant de flux (Streamld) et à au moins deux ports dudit un desdits N noeuds de relayage,
la transmission d'un message auxdits N noeuds de relayage contenant N identifiants de plans, chaque identifiant de plan désignant un plan de réservation (Pik) à utiliser par un desdits N noeuds de relayage correspondant audit plan de réservation de ressources de ladite combinaison, pour que chacun desdits noeuds (Si) de relayage gère ses ressources internes afin qu'elles soient adaptées au plan (Pik) dudit message.

2. Procédé de gestion de réservation de ressources selon la revendication 1, **caractérisé en ce que** ledit identifiant de plan (Reserv_Plan_Id) est unique pour chacun desdits plans de réservation (Pik) parmi lesdits N noeuds de relayage (Si).

3. Procédé de gestion de réservation de ressources selon l'une des revendications 1 ou 2, **caractérisé en ce que** ladite transmission du message comprenant ledit identifiant de plan est effectuée en adressant ledit message audit un desdits N noeuds de relayage en mode diffusion.

4. Procédé de gestion de réservation de ressources selon revendication 1, **caractérisé en ce qu'il** comprend la réception en provenance de chacun desdits N noeuds de relayage d'une définition d'un plan de réservation de ressources actif parmi ledit ensemble de plans de réservation de ressources.

5. Procédé de gestion de réservation de ressources selon l'une quelconque des revendications précédentes, **caractérisé en ce que** ledit ensemble de plans de réservation de ressources associés auxdits N noeuds de relayage comprend au moins deux plans de réservation associés à au moins un même desdits N noeuds de relayage.

6. Procédé de gestion de réservation de ressources selon l'une quelconque des revendications précédentes, **caractérisé en ce que** ledit ensemble de plans de réservation de ressources associés auxdits N noeuds de relayage comprend au moins un plan de réservation associé à au moins deux flux.

7. Procédé d'aide à la réservation de ressources d'un noeud de relayage (Si) dans un réseau de communication à commutation de paquets, ladite réservation de ressources pour ledit noeud de relayage étant établie suivant un plan de réservation de ressources (Pik), **caractérisé en ce que** le procédé comprend au sein d'un dispositif d'aide à la réservation (D2) :
- le stockage d'au moins un plan de réservation de ressources (Pik) associé audit noeud de relayage, ledit plan de réservation de ressources (Pik) correspondant à des ressources locales spécifiques audit noeud de relayage (Si) correspondant et étant défini par un identifiant de plan désignant ledit plan de réservation à utiliser par ledit noeud de relayage (Si) et étant associé à au moins un identifiant de flux (Streamld) et à au moins deux ports dudit noeud de relayage,
la réception d'un message comprenant un identifiant (Reserv_Plan_Id) de plan de réservation courant désignant un plan de réservation courant à utiliser par ledit noeud de relayage (Si) parmi ledit au moins plan de réservation de ressources, et
la transmission d'instructions pour que ledit noeud de relayage (Si) gère ses ressources internes afin qu'elles soient adaptées au plan (Pik) dudit message, et
lorsque ledit noeud (Si) reçoit un message demandant une nouvelle réservation de ressources pour un flux, la détermination pour ledit noeud (Si) d'un nouveau plan (Pik) adapté à cette nouvelle réservation, puis la transmission d'un message comprenant une notification de modification de l'un des plans de réservation de ressources relative audit nouveau plan à l'attention d'un dispositif de gestion de réservation de ressources (D1) pour ledit réseau de communication à commutation de paquets.

8. Procédé d'aide à la réservation de ressources selon la revendication 7, **caractérisé en ce que** ladite mémorisation inclut la mémorisation d'au moins deux plans de réservation de ressources associés audit noeud de relayage.

9. Procédé d'aide à la réservation de ressources selon l'une quelconque des revendications 7 à 8, **caractérisé en ce que** ladite mémorisation inclut la mémorisation d'au moins un dudit au moins un plan de réservation de ressources associé à au moins deux flux.

10. Dispositif (D1) de gestion de réservation **caractérisé en ce que** ledit dispositif (D1) est configuré pour mettre en oeuvre un procédé selon l'une quelconque des revendications 1 à 6.

11. Dispositif (D2) d'aide à la réservation **caractérisé en ce que** ledit dispositif (D2) est configuré pour mettre en oeuvre un procédé selon l'une quelconque des revendications 7 à 9.

12. Noeud de relayage (Si) pour un réseau de communication à commutation de paquets, **caractérisé en ce qu'**il comprend un dispositif (D2) selon revendication 11.

13. Programme produit d'ordinateur pour réservation de ressources, comprenant un code logiciel adapté à exécuter les étapes d'un procédé de gestion de réservation de ressources conforme à l'une quelconque des revendications 1 à 6 ou d'un procédé d'aide à la réservation de ressources conforme à l'une quelconque des revendications 7 à 9.

## Patentansprüche

1. Verfahren zur Verwaltung der Reservierung von Ressourcen für ein Paketschaltungsnetzwerk, das eine Anzahl von mindestens N Weiterleitungsknoten (Si) umfasst, wobei jeder der Weiterleitungsknoten mindestens einen Plan zur Reservierung von Ressourcen (Pik) speichert, die spezifischen lokalen Ressourcen in dem entsprechenden Weiterleitungsknoten (Si) entsprechen, **dadurch gekennzeichnet, dass** das Verfahren innerhalb einer Verwaltungsvorrichtung (D1) umfasst:
- die Speicherung der Pläne zur Reservierung von Ressourcen,
- den Empfang eines Signals, das eine Änderungsmitteilung eines der Pläne zur Reservierung von Ressourcen (Pik) von einem der N Weiterleitungsknoten, der dem einen geänderten der Pläne zur Reservierung zugeordnet ist, umfasst,
- die Bestimmung einer neuen Kombination von N Plänen zur Reservierung von Ressourcen, die jeweils von den N Weiterleitungsknoten zu verwenden sind, auf der Grundlage der Änderungsmitteilung, aus der Gesamtheit der Definitionen von den gespeicherten Plänen zur Reservierung von Ressourcen (Pik), die den N Weiterleitungsknoten (Si) zugeordnet sind, unter Berücksichtigung der von ihnen verwendeten N Pläne, wobei jeder der Pläne zur Reservierung von Ressourcen (Pik) durch eine Plankennung (Reserv_Plan_Id) definiert wird, die den Plan zur Reservierung benennt, der von einem der N Weiterleitungsknoten zu verwenden ist, und mindestens einer Flusskennung (Streamld) und mindestens zwei Ports des einen der N Weiterleitungsknoten zugeordnet ist,
die Übertragung einer Nachricht an die N Weiterleitungsknoten, die N Plankennungen enthält, wobei jede Plankennung einen Plan zur Reservierung (Pik) benennt, der von einem der N Weiterleitungsknoten zu verwenden ist, der dem Plan zur Reservierung von Ressourcen der Kombination entspricht, damit jeder der Weiterleitungsknoten (Si) seine internen Ressourcen erzeugt, um sie an den Plan (Pik) der Nachricht anzupassen.

2. Verfahren zur Verwaltung der Reservierung von Ressourcen nach Anspruch 1, **dadurch gekennzeichnet, dass** die Plankennung (Reserv_Plan_Id) für jeden der Pläne zur Reservierung (Pik) unter den N Weiterleitungsknoten (Si) einzigartig ist.

3. Verfahren zur Verwaltung der Reservierung von Ressourcen nach einem der Ansprüche 1 oder 2, **dadurch gekennzeichnet, dass** die Übertragung der Nachricht, die die Plankennung umfasst, ausgeführt wird, indem die Nachricht an den einen der N Weiterleitungsknoten im Rundfunkmodus adressiert wird.

4. Verfahren zur Verwaltung der Reservierung von Ressourcen nach Anspruch 1, **dadurch gekennzeichnet, dass** es den Empfang von jedem der N Weiterleitungsknoten einer Definition eines aktiven Plans zur Reservierung von Ressourcen aus der Gesamtheit von Plänen zur Reservierung von Ressourcen umfasst.

5. Verfahren zur Verwaltung der Reservierung von Ressourcen nach einem der vorstehenden Ansprüche, **dadurch gekennzeichnet, dass** die Gesamtheit von Plänen zur Reservierung von Ressourcen, die den N Weiterleitungsknoten zugeordnet sind, mindestens zwei Pläne zur Reservierung umfasst, die mindestens einem gleichen der N Weiterleitungsknoten zugeordnet sind.

6. Verfahren zur Verwaltung der Reservierung von Ressourcen nach einem der vorstehenden Ansprüche, **dadurch gekennzeichnet, dass** die Gesamtheit von Plänen zur Reservierung von Ressourcen, die den N Weiterleitungsknoten zugeordnet sind, mindestens einen Plan zur Reservierung umfasst, der mindestens zwei Strömen zugeordnet ist.

7. Verfahren zur Unterstützung der Reservierung von Ressourcen eines Weiterleitungsknotens (Si) in einem Paketschaltungsnetzwerk wobei die Reservierung von Ressourcen für den Weiterleitungsknoten nach einem Plan zur Reservierung von Ressourcen (Pik) festgelegt wird, **dadurch gekennzeichnet, dass** das Verfahren innerhalb einer Vorrichtung zur Unterstützung der Reservierung (D2) umfasst:
- die Speicherung von mindestens einem Plan zur Reservierung von Ressourcen (Pik), der dem Weiterleitungsknoten zugeordnet ist, wobei der Plan zur Reservierung von Ressourcen (Pik) spezifischen lokalen Ressourcen in dem entsprechenden Weiterleitungsknoten (Si) entspricht und durch eine Plankennung festgelegt wird, die den Plan zur Reservierung benennt, der von dem Weiterleitungsknoten (Si) zu verwenden ist, und mindestens einer Flusskennung (Streamld) und mindestens zwei Ports des Weiterleitungsknotens zugeordnet ist, den Empfang einer Nachricht, die eine aktuelle Kennung (Reserv_Plan_Id) des aktuellen Plans zur Reservierung umfasst, die einen aktuellen Plan zur Reservierung benennt, der von dem Weiterleitungsknoten (Si) aus dem mindestens einen Plan zur Reservierung von Ressourcen zu verwenden ist, und
die Übertragung von Anweisungen, damit der Weiterleitungsknoten (Si) seine internen Ressourcen erzeugt, um sie an den Plan (Pik) der besagten anzupassen, und
wenn der Knoten (Si) eine Nachricht erhält, mit der eine neue Reservierung von Ressourcen für einen Strom angefordert wird, die Bestimmung für den Knoten (Si) eines neuen, an diese neue Reservierung angepassten Plans (Pik),
dann die Übertragung einer Nachricht, die eine Änderungsmitteilung eines der Pläne zur Reservierung von Ressourcen in Bezug auf den neuen Plan enthält, die an eine Vorrichtung zur Verwaltung der Reservierung von Ressourcen (D1) für das paketvermittelte Kommunikationsnetzwerk gerichtet ist.

8. Verfahren zur Unterstützung der Reservierung von Ressourcen nach Anspruch 7, **dadurch gekennzeichnet, dass** die Speicherung die Speicherung von mindestens zwei Plänen zur Reservierung von Ressourcen, die dem Weiterleitungsknoten zugeordnet sind, beinhaltet.

9. Verfahren zur Unterstützung der Reservierung von Ressourcen nach einem der vorstehenden Ansprüche 7 bis 8, **dadurch gekennzeichnet, dass** die Speicherung die Speicherung von mindestens einem des mindestens einen Plans zur Reservierung von Ressourcen, der mindestens zwei Strömen zugeordnet ist, beinhaltet.

10. Vorrichtung (D1) zur Verwaltung der Reservierung, **dadurch gekennzeichnet, dass** die Vorrichtung (D1) so konfiguriert ist, um ein Verfahren nach einem der Ansprüche 1 bis 6 durchzuführen.

11. Vorrichtung (D2) zur Unterstützung der Reservierung, **dadurch gekennzeichnet, dass** die Vorrichtung (D2) so konfiguriert ist, um ein Verfahren nach einem der Ansprüche 7 bis 9 durchzuführen.

12. Weiterleitungsknoten (Si) für ein Paketschaltungsnetzwerk, **dadurch gekennzeichnet, dass** er eine Vorrichtung (D2) nach Anspruch 11 umfasst.

13. Computerprogrammprodukt zur Reservierung von Ressourcen, das einen Softwarecode umfasst, der geeignet ist, die Schritte eines Verfahrens zur Verwaltung der Reservierung von Ressourcen nach einem der Ansprüche 1 bis 6 oder eines Verfahrens zur Unterstützung der Reservierung von Ressourcen nach einem der Ansprüche 7 bis 9 durchzuführen.

## Claims

1. A method of managing the reservation of resources for a packet-switched communication network having a number at least equal to N relaying nodes (Si), each of said relaying nodes storing at least one resource reservation plan (Pik) corresponding to local resources specific to said corresponding relaying node (Si), **characterised in that** the method includes within a management device (D1):
- the storage of said resource reservation plans,
- the reception of a signal comprising a notification of a modification of one of said resource reservation plans (Pik) from one of said N relaying nodes associated with said modified reservation plans,
- the determination of a new combination of N resource reservation plans that must be used, respectively, by said N relaying nodes, based on said modification notification, from among all of the definitions of said stored resource reservation plans (Pik) that are associated with said N relaying nodes (Si) taking account of the N plans that they are using, each of said resource reservation plans (Pik) being defined by a plan identifier (Reserv_Plan_ld) designating said reservation plan to be used by one of said N relaying nodes and associated with at least one stream identifier (Streamld) and at least two ports of said one of said N relaying nodes,
the transmission of a message to said N relaying nodes containing N plan identifiers, each plan identifier designating a reservation plan (Pik) to be used by one of said N relaying nodes corresponding to said resource reservation plan of said combination, so that each of said relaying nodes (Si) manages its internal resources so that they are adapted to the plan (Pik) for said message.

2. A method of managing the reservation of resources according to claim 1, **characterised in that** said plan identifier (Reserv_Plan_Id) is unique for each of said reservation plans (Pik) among said N relaying nodes (Si).

3. A method of managing the reservation of resources according to one of claims 1 or 2, **characterised in that** said transmission of the message comprising said plan identifier is carried out by sending said message to said one of said N relaying nodes, in broadcast mode.

4. A method of managing the reservation of resources according to claim 1, **characterised in that** it comprises the reception from each of said N relaying nodes of a definition of an active resource reservation plan from among said set of resource reservation plans.

5. A method of managing the reservation of resources according to any one of the previous claims, **characterised in that** said set of resource reservation plans associated with said N relaying nodes comprises at least two reservation plans associated with at least one of said N relaying nodes.

6. A method of managing the reservation of resources according to any one of the previous claims, **characterised in that** said set of resource reservation plans associated with said N relaying nodes comprises at least one reservation plan associated with at least two streams.

7. A method of aiding the reservation of resources of a relaying node (Si) in a packet-switched communication network, said reservation of resources for said relaying node being established according to a resource reservation plan (Pik), **characterised in that** the method comprises within a reservation aid device (D2):
- the storage of at least one resource reservation plan (Pik) associated with said relaying node, said resource reservation plan (Pik) corresponding to local resources specific to said corresponding relaying node (Si) and being defined by a plan identifier designating said reservation plan to be used by said relaying node (Si) and being associated with at least one stream identifier (Streamld) and at least two ports of said relaying node,
the reception of a message comprising a current reservation plan identifier (Reserv_Plan_Id) designating a current reservation plan to be used by said relaying node (Si) from among said at least one resource reservation plan, and
the transmission of instructions so that said relaying node (Si) manages its internal resources so that they are adapted to the plan (Pik) for said message, and
when said node (Si) receives a message requesting a new resource reservation for a stream, the determination for said node (Si) of a new plan (Pik) adapted to this new reservation and then the transmission of a message comprising a notification of a modification to one of the resource reservation plans relative to said new plan to the attention of a resource reservation management device (D1) for said packet-switched communication network.

8. A method of aiding the reservation of resources according to claim 7, **characterised in that** said storage includes the storage of at least two resource reservation plans associated with said relaying node.

9. A method of aiding the reservation of resources according to any one of claims 7 to 8, **characterised in that** said storage includes the storage of at least one of said at least one resource reservation plan associated with at least two streams.

10. A reservation management device (D1) **characterised in that** said device (D1) is configured to implement a method according to any one of claims 1 to 6.

11. A reservation aid device (D2) **characterised in that** said device (D2) is configured to implement a method according to any one of claims 7 to 9.

12. A relaying node (Si) for a packet-switched communication network, **characterised in that** it comprises a device (D2) according to claim 11.

13. A computer program product for the reservation of resources, comprising software code adapted to execute the steps of a method of managing the reservation of resources in accordance with any one of claims 1 to 6 or a method of aiding the reservation of resources in accordance with any one of claims 7 to 9.
